# EUROPÄISCHE PATENTANMELDUNG

(11) **EP 1 306 915 A2**
(43) Veröffentlichungstag der Anmeldung: **02.05.2003**
(21) Anmeldenummer: 02023450.6
(22) Anmeldetag: 21.10.2002
(51) Int. Cl.: H01M 8/02, H01M 8/24, H01M 10/04

(54) **Verfahren zur Herstellung einer Träger-Dichtung**

(30) Priorität: 23.10.2001 DE 10152192
(71) Anmelder: Carl Freudenberg KG, 69469 Weinheim (DE)
(72) Erfinder: Schilling, Hermann, Dr., 69469 Weinheim (DE); Salama, Karim, 69469 Weinheim (DE); Barth, Armin, 69517 Gorxheimertal (DE); Pflästerer, Jens, 69509 Mörlenbach/Weiher (DE)

(57) **Zusammenfassung**

Verfahren zur Herstellung einer Träger-Dichtung zur Abdichtung zweier paralleler Gegenflächen, insbesondere zur Abdichtung der Reaktanten in einer Brennstoffzelle, bei dem
(i) ein blattförmiges Trägerelement in einen Rahmen eingebracht und in einer Ebene aufgespannt wird,
(ii) das Trägerelement auf zumindest einer Oberfläche einen umlaufenden Dichtbereich aufweist, auf dem ein nicht polymerisiertes Dichtungsmaterial aufgebracht wird und anschließend
(iii) das aufgetragene Dichtungsmaterial in einem Vulkanisationswerkzeug geformt und polymerisiert wird.

## Beschreibung

Die Erfindung betrifft ein Verfahren zur Herstellung einer Träger-Dichtung zur Abdichtung zweier paralleler Gegenflächen, insbesondere zur Abdichtung der Reaktanten in einer Brennstoffzelle.

### Stand der Technik

Brennstoffzellen sind elektrochemische Energiewandler und seit langem bekannt. Sie erzeugen elektrische Energie durch Oxidation eines Brennstoffs. Sie bestehen im einfachsten Fall aus planaren, elektrisch leitenden Elektroden, die gasdurchlässig sind und die durch eine ionenleitende Membran voneinander getrennt sind. Die Zufuhr der Reaktionsmedien erfolgt durch Verteilungsnetze, die sowohl gegeneinander als auch nach außen hin abgedichtet sein müssen.

Chemische Brennstoffzellen gewinnen zunehmend an Bedeutung als zukünftige Energiequelle für den Antrieb in Kraftfahrzeugen. Voraussetzung für diese Anwendung ist ein Herstellungsverfahren in industriellem Maßstab. Für die mobile Anwendung wird ein möglichst günstiges Massen-Leistungs-Verhältnis angestrebt und eine über eine Gebrauchsdauer von mehreren Jahren hinweg zuverlässige Abdichtung der Verteilungsnetze.

Für die mobile Anwendung werden sogenannte Polymer-Elektrolyt-Membran-Brennstoffzellen diskutiert, die im einfachsten Fall aus zwei Elektroden und einer zwischen den Elektroden angeordneten ionenleitenden Schicht bestehen. An den Elektroden liegen Platten an, die Verteilerkanäle aufweisen, an denen die Reaktanten zugeführt werden.

Insbesondere die mobile Anwendung der Brennstoffzelle stellt an das Dichtungssystem der Brennstoffzelle hohe Anforderungen. In einem Kraftfahrzeug ist die Brennstoffzelle rauhen Umgebungsbedingungen ausgesetzt. Die Dichtung muß starken Erschütterungen, Feuchteschwankungen und Temperaturschwankungen standhalten können.

Aus der DE 197 13 250 ist eine Polymer-Elektrolyt-Membran-Brennstoffzelle bekannt, bei der zur Abdichtung der Gasräume sowie zur Abdichtung der Fluid-Sammelkanäle ein gas- und flüssigkeitsdichter adhäsiver Verbund zwischen Elektroden und Membran einerseits und den angrenzenden Zell-Trennplatten mit den darin angeordneten Verteilerkanälen für die Reaktanten andererseits vorgeschlagen wird. Das adhäsive Verbundmaterial wird durch ein Klebermaterial, beispielsweise einem Epoxyd-Harz, realisiert, das am Randbereich der einzelnen Lagen aufgetragen wird. Die Verarbeitung des Klebermaterials ist aber umständlich und für eine Serienfertigung nur beschränkt einsetzbar.

### Darstellung der Erfindung

Der Erfindung liegt die Aufgabe zugrunde, ein Herstellungsverfahren anzugeben, mit dem die Reaktanten in einer Brennstoffzelle zuverlässig abgedichtet werden können und mit geringen Kosten eine Herstellung in der Serie möglich wird.

Diese Aufgabe wird erfindungsgemäß durch ein Verfahren mit den Merkmalen von Patentanspruch 1 gelöst. Auf vorteilhafte Ausgestaltungen nehmen die Unteransprüche Bezug.

Gemäß der Erfindung ist ein Verfahren zur Herstellung einer Träger-Dichtung vorgesehen, bei der die Abdichtung der Reaktanten in einer Brennstoffzelle durch eine Abdichtung zweier paralleler Gegenflächen dadurch hergestellt wird, indem
(i) ein blattförmiges Trägerelement in einen Rahmen eingebracht und in einer Ebene aufgespannt wird,
(ii) das Trägerelement auf zumindest einer Oberfläche einen umlaufenden Dichtbereich aufweist, auf dem ein nicht polymerisiertes Dichtungsmaterial aufgebracht wird und anschließend
(iii) das aufgetragene Dichtungsmaterial in einem Vulkanisationswerkzeug geformt und polymerisiert wird.

Durch das Anvulkanisieren einer Dichtung auf einem Trägerelement wird die Dichtung integraler Bestandteil eines Elementes der Brennstoffzelle. Die Handhabung eines blattförmigen Trägerelements in einem Rahmen läßt die Verwendung von sehr dünnen Trägerelementen, beispielsweise einer ionenleitenden Membran, in einer Serienfertigung zu.

Von besonderem Vorteil ist, wenn das Aufspannen des blattförmigen Trägerelements an seitlichen Rändern und in einer Ebene mit einem Rahmen erfolgt. Dadurch kann ein sehr dünner, blattförmiger Träger in einer Ebene durch laterale Stellelemente planar aufgespannt werden. Auf das aufgespannte Trägerelement wird anschließend nicht-polymerisiertes Dichtungsmaterial in einem flüssigen Zustand durch eine Auftragsvorrichtung auf der einen Oberfläche des Trägerelements aufgetragen. Anschließend wird der Rahmen samt dem Trägerelement und dem auf der einen Seite aufgetragenen Dichtungsmaterial gewendet und auf der anderen Oberfläche Dichtungsmaterial aufgebracht. Das so beschichtete Trägerelement wird samt Rahmen in die Kavität eines Vulkanisationswerkzeuges eingebracht und das Dichtungsmaterial unter Anwendung von Druck und Temperatur zu einem Dichtungsprofil geformt, das an beiden Oberflächen des Trägerelements gleichzeitig anvulkanisiert ist. Nach dem Erstarren lassen wird der Rahmen mit dem Trägerelement und dem Dichtungsprofil aus dem Vulkanisationswerkzeug entnommen. Dichtung und Trägerelement bilden damit eine Einheit, die die weiteren Verfahrensschritte bei der Herstellung einer Brennstoffzelle erleichtern. Das Trägerelement und die Dichtung können sehr dünn ausgebildet werden, wodurch ein sehr kompakter Aufbau der Brennstoffzelle möglich ist.

Das Trägerelement kann durch die lonenaustauschmembran, durch die Membran-Elektroden-Einheit, durch ein Gewebe, Vliesstoff oder durch eine Folie gebildet sein.

Von Vorteil ist, wenn in Verfahrensschritt c) nach dem Wenden der Rahmen auf dem Maschinentisch der Auftragsvorrichtung zentriert wird. Das Dichtungsmaterial kann dann auf den Oberflächen genau gegenüberliegend aufgetragen werden.

Von Vorteil ist, wenn das Dichtungsmaterial in einer in sich geschlossenen Dichtraupe aufgetragen wird. Durch die Vulkanisation entstehen dadurch in sich geschlossene Dichtungsprofile.

Es empfiehlt sich, wenn die Verfahrenszeit für die Schritte b) bis d) der Verfahrenszeit für die Schritte e) und f) im Wesentlichen entspricht. In diesem Fall können das Auftragen des Dichtungsmaterials auf die Oberflächen eines ersten Trägerelements und die Formung des Dichtungsprofils und die Vulkanisation bei einem zweiten Trägerelement zeitlich parallel erfolgen. Ein Zwischenlagern von Rohlingen ist damit nicht erforderlich. Der Prozess kann kontinuierlich geführt werden. Hierbei ist es günstig, wenn die Verfahrenszeit kürzer als 1 Minute ist, um den Prozess rationell zu gestalten und somit den Bauteilpreis in einer vernünftigen Größenordnung zu halten.

Von Vorteil ist weiterhin, in den Verfahrensschritten b) und d) das gleiche polymere Dichtungsmaterial aufzutragen. Verformungen des Endprodukts aufgrund unterschiedlicher Wärmeausdehnungskoeffizienten werden dadurch sicher vermieden. Andererseits kann es in besonderen Fällen ebenso vorteilhaft sein, unterschiedliche polymere Dichtungsmaterialien zu verwenden, um gezielt bestimmte Effekte einzustellen, beispielsweise um auf beiden Seiten eines Trägerelements unterschiedliche Oberflächeneigenschaften zu erzielen, z.B. auf Seite 1 Dichten, auf Seite 2 Kleben.

Vorteilhafterweise wird im Verfahrensschritt c) der Rahmen nach dem Wenden in der Kavität zentriert. Das formgebende Vulkanisationswerkzeug steht dann in Überdeckung mit dem aufgetragenen flüssigen Dichtungsmaterial.

Von Vorteil ist, wenn das polymere Dichtungsmaterial ein Elastomer, besonders bevorzugt ein thermoplastisches Polymer (TPE), Polytetrafluorethylen (PTFE), Acrylnitril-Butadien-Kautschuk (NBR), Acrylat-Kautschuk (ACM), Fluor-Kautschuk (FPM), Ethylen-Propylen-Dien-Kautschuk (EPDM) oder auch ein Silikonmaterial ist.

## Patentansprüche

1. Verfahren zur Herstellung einer Träger-Dichtung zur Abdichtung zweier paralleler Gegenflächen, insbesondere zur Abdichtung der Reaktanten in einer Brennstoffzelle, bei dem
(i) ein blattförmiges Trägerelement in einen Rahmen eingebracht und in einer Ebene aufgespannt wird,
(ii) das Trägerelement auf zumindest einer Oberfläche einen umlaufenden Dichtbereich aufweist, auf dem ein nicht polymerisiertes Dichtungsmaterial aufgebracht wird und anschließend
(iii) das aufgetragene Dichtungsmaterial in einem Vulkanisationswerkzeug geformt und polymerisiert wird.

2. Verfahren nach Anspruch 1, **dadurch gekennzeichnet, dass**
a) das Aufspannen des blattförmigen Trägerelementes an seitlichen Rändern und in einer Ebene in einem Rahmen erfolgt,
b) nicht polymerisiertes Dichtungsmaterial in einem flüssigem Zustand durch eine Auftragsvorrichtung auf der einen Oberfläche des Trägerelementes aufgetragen wird,
c) der Rahmen samt Trägerelement und aufgetragenem Dichtungsmaterial gewendet wird,
d) nicht polymerisiertes Dichtungsmaterial in einem flüssigem Zustand durch die Auftragsvorrichtung auf dem Dichtbereich auf der anderen Oberfläche des Trägerelementes aufgetragen wird,
e) der Rahmen samt aufgespanntem Trägerelement und aufgetragenem Dichtungsmaterial in die Kavität eines Vulkanisationswerkzeugs eingebracht wird und das Dichtungsmaterial unter Anwendung von Druck und Temperatur zu einem Dichtungsprofil geformt und an beiden Oberflächen des Trägerelements gleichzeitig anvulkanisiert wird,
f) der Rahmen mit Trägerelement und Dichtungsprofil aus dem Vulkanisationswerkzeug entnommen wird.

3. Verfahren nach Anspruch 2, **dadurch gekennzeichnet, dass** das Trägerelement eine Membran-Elektroden-Einheit (MEA) oder eine lonenaustauschmembran (PEM), ein Gewebe oder ein Vliesstoff oder eine Folie ist.

4. Verfahren nach Anspruch 2, **dadurch gekennzeichnet, dass** in c) nach dem Wenden der Rahmen auf dem Maschinentisch der Auftragsvorrichtung zentriert wird, um das Dichtungsmaterial auf den Oberflächen genau gegenüberliegend aufzutragen.

5. Verfahren nach Anspruch 4, **dadurch gekennzeichnet, dass** das Dichtungsmaterial in einer in sich geschlossenen Dichtraupe aufgetragen wird.

6. Verfahren nach Anspruch 2, **dadurch gekennzeichnet, dass** die Verfahrenszeit für die Schritte b) bis d) der Verfahrenszeit für die Schritte e) und f) im Wesentlichen entspricht.

7. Verfahren nach Anspruch 6, **dadurch gekennzeichnet, dass** die Verfahrenszeit kürzer als 1 Minute ist.

8. Verfahren nach Anspruch 2, **dadurch gekennzeichnet, dass** in den Schritten b) und d) das gleiche polymere Dichtungsmaterial aufgetragen wird.

9. Verfahren nach Anspruch 2, **dadurch gekennzeichnet, dass** in Schritt c) der Rahmen nach dem Wenden in der Kavität zentriert wird.

10. Verfahren nach einem oder mehreren der vorstehenden Ansprüche, **dadurch gekennzeichnet, dass** das polymere Dichtungsmaterial ein Elastomer, besonders bevorzugt ein thermoplastisches Polymer (TPE), Polytetrafluorethylen (PTFE), Acrylnitril-Butadien-Kautschuk (NBR), Acrylat-Kautschuk (ACM), Fluor-Kautschuk (FPM), Ethylen-Propylen-Dien-Kautschuk (EPDM) oder auch Silikon ist.
